# EUROPEAN PATENT SPECIFICATION

(11) **EP 4 190 694 B1**
(45) Date of publication and mention of the grant of the patent: **02.07.2025**
(21) Application number: 21383089.6
(22) Date of filing: 02.12.2021
(51) Int. Cl.: B63B 81/00, B64U 80/84, B63B 35/44, B64U 101/26, B64U 101/30, B63B 35/00

(54) **A SURVEILLANCE SYSTEM FOR AN OFFSHORE INFRASTRUCTURE**
ÜBERWACHUNGSSYSTEM FÜR EINE OFFSHORE-INFRASTRUKTUR
SYSTÈME DE SURVEILLANCE POUR UNE INFRASTRUCTURE EN MER

(43) Date of publication of application: 07.06.2023
(73) Proprietor: Eolos Floating Lidar Solutions, S.L., 08110 Montcada I Reixac (ES)
(72) Inventor: PUIGCORBÉ PUNZANO, Jordi, 08110 MONTCADA I REIXAC (ES); AGHABI RIVAS, Rajai, 08110 MONTCADA I REIXAC (ES)
(74) Representative: ZBM Patents - Zea, Barlocci & Markvardsen

(56) References cited:
- WO-A1-2018/236903
- CN-A- 111 776 148
- CN-A- 112 572 707

## Description

The present disclosure relates to surveillance systems for an offshore infrastructure and to surveillance methods for an offshore infrastructure.

### BACKGROUND

Offshore infrastructures or installations may require frequent inspections to ensure an efficient operation. Examples of offshore infrastructures may be offshore wind turbines, oil and gas equipment, offshore electrical substations or underwater power cables. Several offshore wind turbines may be connected trough underwater power cables to an offshore electrical substation. In the offshore electrical substation, the voltage of the energy produced by the offshore wind turbines is stepped up to a higher voltage to reduce the electrical loss during the transport from the offshore electrical substation to an onshore electrical substation through underwater power cables.

Maintenance operators may be transported by a boat to the offshore infrastructure to perform a visual inspection and/or to monitor the operation of the offshore infrastructure. Offshore infrastructures are generally far from the coast. Navigating from a harbor to the offshore infrastructure may require a relative long time. These operations thus involve high costs. In addition, the maintenance operators cannot travel, e.g. navigate or fly, to the offshore infrastructure during extreme weather events.

Unmanned aerial vehicles (UAV) or drones may be used to inspect wind turbines, e.g. onshore wind turbines. For example, wind turbine blades may be inspected by unmanned aerial vehicles. The unmanned aerial vehicle may take images from the wind turbine and may send these images to a maintenance operator. Unmanned aerial vehicles may also be used for inspecting offshore wind turbines. However, a boat must bring the unmanned aerial vehicle closer to the offshore wind turbine to be inspected.

A maintenance operator arranged at the boat may remotely operate the unmanned aerial vehicle to inspect the offshore wind turbine. Alternatively, the unmanned aerial vehicle may inspect the offshore wind turbine autonomously. The unmanned aerial vehicle may send images of the offshore wind turbine to the maintenance operator. The maintenance operator may then analyze the images received from the unmanned aerial vehicle. This requires the direct involvement of the maintenance operator. Consequently, inspecting the offshore infrastructure only takes place when the weather conditions allow a manned boat to navigate to the offshore infrastructure.

Document WO 2018/236903, in accordance with its abstract, states a system and method for automatically recharging a unmanned aerial vehicle (UAV) on a moving platform, comprising: a software module identifying the moving platform; a software module estimating a real-time state of the moving platform; a software module controlling automatic landing of the UAV on the moving platform based on the real-time state estimation of the moving platform and data collected from the one or more sensors; a software module controlling automatic connection of the UAV to a charging station of the moving platform with a pre-determined orientation; and a software module controlling automatic taking off of the UAV from the moving platform after charging.

Document CN112572707, in accordance with its abstract, states an offshore wind power intelligent inspection system which comprises a buoy and an unmanned aerial vehicle take-off and landing recovery platform. The side surface of the buoy is fixedly provided with a water jet propulsion device, and the water jet propulsion device is composed of a water jet propeller and a protective cover; the two sides of the upper surface of the buoy are connected with a deck through a front damping device and a rear damping device correspondingly, an underwater inspection device is fixedly installed on the lower surface of the deck, and the unmanned aerial vehicle take-off and landing recovery platform is fixedly installed in the middle of the upper surface of the deck; and an intelligent unmanned aerial vehicle is correspondingly arranged at the upper end of the unmanned aerial vehicle take-off and landing recovery platform. According to the offshore wind power intelligent inspection system, a novel structural design is adopted so that the device can enable an intelligent unmanned aerial vehicle and an unmanned ship to work cooperatively, the detection range of equipment is expanded, the unmanned ship operates autonomously through a water jet propulsion structure, and the cruising efficiency is improved; and an anti-wave structure is arranged in the device, and the relative stability of the unmanned ship in the cruising process is improved.

Document CN111776148, in accordance with its abstract, states a sea-air-submersible integrated inspection system based on a small unmanned ship. The system comprises a mooring type unmanned aerial vehicle inspection system (1), a ship borne inspection system (2), an unmanned ship platform (4) and a mooring type underwater robot inspection system (5), the unmanned ship platform (4) comprises a fixed portal frame (4.2) and an unmanned ship body (4.19); the unmanned ship body (4.19) is in a wave-resistant catamaran shape. Wherein the mooring type unmanned aerial vehicle inspection system (1) comprises a multi-rotor unmanned aerial vehicle (1.1) and an unmanned aerial vehicle landing platform (1.4), and the mooring type underwater robot inspection system (5) comprises a remote control winch (5.1), an underwater GPS receiver array (5.4), an underwater inspection robot (5.7) and an underwater GPS positioner (5.8). The inspection system has the characteristics of powerful function, high efficiency, continuous operation, low inspection cost and the like, and can meet the requirements of rapidly increased wind power plant installed capacity and other large-scale ocean engineering equipment on inspection equipment.

The present disclosure provides examples of devices and methods that at least partially resolve some of the aforementioned disadvantages.

### SUMMARY

In a first aspect, a surveillance system for an offshore infrastructure is provided. The surveillance system comprises an unmanned surface vessel (USV), an unmanned vehicle for inspecting the offshore infrastructure and a controller. The unmanned surface vessel comprises an environmental sensor system to measure one or more environmental parameters and a carrying area to carry the unmanned vehicle. The controller is configured: to obtain one or more environmental parameters from the environmental sensor system, to obtain one or more operational parameters of the offshore infrastructure, to compare each of the operational parameters to an expected value and to determine, based on the comparison, to inspect the offshore infrastructure with the unmanned vehicle.

According to this aspect, the unmanned surface vessel may transport the unmanned vehicle to a specific location. In addition, the unmanned surface vessel and the controller interact to decide to perform an inspection with the unmanned vehicle. Human involvement in deciding to inspect the offshore infrastructure may be reduced. Inspection or surveillance costs may thus be reduced. In addition, as no human crew is mandatory for the unmanned surface vessel, the unmanned surface vessel may increase the operating time and the operating conditions when compared to a manned boat. Consequently, frequency of inspections of the offshore infrastructure may also be increased. Safety and operational efficiency of the offshore infrastructure may thus be improved.

Furthermore, as no humans are required in offshore harsh environment, safety of the surveillance and inspection of the offshore infrastructure is improved. Furthermore, surveillance costs may be reduced.

In this disclosure, an unmanned surface vessel (USV) shall be understood as a boat or ship that operates on the surface of the water without a crew. The unmanned surface vessel may autonomously operate, for example, complying with the International Regulations for Preventing Collisions at Sea (COLREGs). However, in some cases, the unmanned surface vessel may also be remotely controlled. Batteries and generation energy sources may be provided at the unmanned surface vessel. These batteries and generation energy sources may be employed to power the unmanned surface vessel, the unmanned vehicle and/or the controller. For example, the unmanned vehicle may be charged at the carrying area.

Examples of offshore infrastructures are offshore wind turbines, offshore wind farms, oil and gas equipment, offshore electrical substations or underwater power cables. The surveillance system according to this disclosure may allow to enhance the surveillance of e.g. an offshore wind turbine. Failures or deviations from an expected behavior may be detected early. Maintenance operations may then be quickly scheduled to correct these early detected failures or deviations. In case of offshore wind turbines, using the surveillance system may improve the efficiency of the wind turbine and increase the annual energy production.

In some examples, the controller is arranged at the unmanned surface vessel. In this way, communications between the environmental sensor system and the controller may be improved. Instability of the communications may thus be minimized. The unmanned surface vessel may thus autonomously decide if the offshore infrastructure is to be inspected by the unmanned vehicle. The surveillance system thus comprises onboard processing capabilities.

In other examples, the controller is arranged at an offshore infrastructure, e.g. at an offshore wind turbine. In further examples, the controller is arranged at an onshore location, e.g. at a remote control center.

The controller may include a processor and a non-transitory machine-readable storage medium coupled to the processor. The processor performs operations on data, for example, operations for the surveillance of the offshore infrastructure. The processor may execute a computing program comprising instructions that cause the processor to monitor the offshore infrastructure.

In some examples, the processor is a dedicated processor for controlling the surveillance of the offshore infrastructure. In other examples, the processor also controls the navigation of the unmanned surface vessel. The computer program may be embodied on a storage medium (for example, a CD-ROM, a DVD, a USB drive, a computer memory or a read-only memory) or carried on a carrier signal (for example, on an electrical or optical carrier signal).

The computer program may be in the form of source code, object code, a code intermediate source and object code such as in partially compiled form, or in any other form suitable for use in implementing the methods for performing a surveillance of the offshore infrastructure. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

The environmental sensor system installed on the unmanned surface vessel may comprise a lidar, a sonar, an ocean sensor, a temperature sensor, air density sensor, an infrared sensor and/or a camera.

A lidar is a light detection and ranging that may be used to at least measure wind speed and wind direction. In addition, the lidar may also obtain wind turbulence and air density. In some examples, the lidar is a vertical lidar and/or a scanning lidar. Wind shear may thus be accurately determined. For example, wind speed and direction may be used to determine the expected power output of a wind turbine. In some examples, the lidar may also be used to obtain data from sea characteristics such as wave height or wave frequency.

A sonar is a sound navigation and ranging that may be used to measure distances or to detect objects on or under the surface of the water. The unmanned surface vessel may employ the sonar to obtain information about the seabed and/or the water depth.

An ocean sensor may be used to measure ocean or sea water characteristics. For example, sea current direction, wave height, wave direction, wavelength and sea level may be measured with an ocean sensor. In some examples, the ocean sensor also comprises a salinity sensor. In some examples, the ocean sensor may comprise a water quality sensor. The water quality sensor may sense the quality of the water, for example, measurement of its pH, conductivity or the amount of microplastics, other particles or fluids in the water. The integration of an ocean sensor with a meteorological sensor may be called met-ocean sensor.

In some examples, the temperature sensor and/or the air density sensor is a dedicated sensor. In other examples, these sensors are integrated in a met-ocean sensor or in a meteorological station. In some examples, the environmental sensor system comprises a plurality of temperature sensors, e.g. an air temperature sensor and a water temperature sensor.

The infrared sensor may be used to remotely monitor the temperature of the offshore infrastructure or of one or more parts of the offshore infrastructure. For example, the infrared sensor may detect the temperature of a specific part of an electrical substation or of a portion of an underwater power cable. Excessive temperatures may be indicative of a fault.

A camera, e.g. a video camera may obtain images or videos of the offshore infrastructure. In addition, the camera may provide information about the air visibility.

As explained above, the environmental sensor system is configured to measure one or more environmental parameters. Examples of these environmental parameters are thus wind speed, wind direction, wind turbulence, air density, visibility, temperature, sea current speed, sea current direction, wave height, wave direction, wavelength, sea salinity, water quality and sea level.

Depending on the nature of the inspection to be carried out, the unmanned vehicle may be an unmanned aerial vehicle (UAV) or an unmanned underwater vehicle (UUV). In some examples, the surveillance system comprises a plurality of unmanned vehicles, e.g. two unmanned aerial vehicles and one unmanned underwater vehicle. The unmanned aerial vehicle (UAV), commonly known as a drone, may autonomously fly from the carrying area of the unmanned surface vessel to an offshore infrastructure. The unmanned underwater vehicles (UUV), sometimes known as underwater drones, are submergible vehicles that can operate underwater without a human occupant. The unmanned underwater vehicle may travel from the carrying area of the unmanned surface vessel to an offshore infrastructure, e.g. an underwater power cable. In some examples, the unmanned vehicles may also be remotely controlled by a human.

The unmanned vehicle, e.g. a UUV and/or a UAV, may be equipped with one or more sensors to inspect the offshore infrastructure. Examples of these sensors are an ultrasonic sensor, an infrared sensor, a sonar and/or a camera.

The controller of the surveillance system is capable to obtain one or more operational parameters of the offshore infrastructure. In some examples, the environmental sensor system may obtain one or more operational parameters and the controller may receive the operational parameters from the environmental sensor system. For example, an environmental sensor system comprising an infrared sensor may obtain the temperature of an offshore electrical substation and/or the temperature of a submarine power cable. These temperatures may thus be operational parameters of the offshore infrastructure.

In some examples, one or more operational parameters are obtained from an external source. For example, the controller of the surveillance system is communicatively coupled with an offshore wind turbine, e.g. with a SCADA system of the offshore wind turbine, or with a plurality of offshore wind turbines. The controller may thus receive one or more operational parameters from the offshore wind turbine. For example, the controller may receive a pitch angle, a yaw angle and/or a power output of the offshore wind turbine.

As previously explained, the controller is configured to compare each of the operational parameters to an expected value. For example, the controller may compare the real time temperature of the underwater power cable to an expected temperature for the current environmental conditions. If the temperature of the underwater power cable is higher than expected, this may be indicative of a power failure. The controller may then determine to inspect the underwater power cable with an unmanned underwater vehicle to check the existence of a failure or malfunctioning, e.g. a hot peak.

In other examples, the controller may compare the power output of an offshore wind turbine to the expected power output. The controller may further calculate the expected power output from the one or more environmental parameters, e.g. wind speed. If the real time power output is lower than the expected power output, a failure or a malfunctioning may occur. For example, the wind turbine may be misaligned or the leading-edge of a wind turbine blade may be degraded. Depending on how different the real time power output and the expected power output are, the controller may determine to inspect the offshore wind turbine with the unmanned vehicle or to obtain more data from the wind turbine, i.e. more measures of the operational parameter(s) or from the environmental sensor system or even, instruct the unmanned surface vessel to move to another location.

The controller may also be configured to compare at least one of the one or more environmental parameters to a threshold. Determining to inspect the offshore infrastructure is further based on the result of this comparison.

For example, in case of an inspection of a wind turbine, the controller may determine not to inspect the wind turbine if the wind speed is higher than a wind speed threshold. The wind speed threshold may be the maximum wind speed at which an unmanned aerial vehicle can safely operate. Inspections may thus be adapted to the current environmental conditions.

If the inspection the offshore infrastructure is determined, the controller may instruct the unmanned vehicle to travel towards the offshore infrastructure, e.g. to fly to the offshore wind turbine. The unmanned vehicle may acquire data from the offshore infrastructure and the controller may be configured to receive, from the unmanned vehicle, data about the inspection of the offshore infrastructure.

The controller may analyze this data and/or send to an onshore controller, e.g. arranged at an onshore control center, for analysis.

The environmental sensor system may comprise a plurality of sensors. These sensors may be according to any of the examples herein described. This plurality of sensors may be used to obtain a plurality of environmental parameter to precisely determine if an inspection operation is to be performed.

In a further aspect, a surveillance method for an offshore infrastructure is provided. The method comprises measuring, with an environmental sensor system of an unmanned surface vessel (USV), one or more environmental parameters and obtaining one or more operational parameters of the offshore infrastructure. The method further comprises comparing each of the operational parameters to an expected value and determining, based on the comparison, to inspect the offshore infrastructure with an unmanned vehicle.

Advantages derived from this aspect may be similar to those mentioned regarding the surveillance system of the first aspect. The surveillance system according to any of the examples herein disclosed may be employed in carrying out the surveillance method for an offshore infrastructure.

### BRIEF DESCRIPTION OF THE DRAWINGS

Non-limiting examples of the present disclosure will be described in the following, with reference to the appended drawings, in which:
Figure 1 schematically represents a surveillance system according to an example of the present disclosure;
Figure 2 schematically represents a plurality of offshore infrastructures suitable to be monitored by the surveillance system according to an example of the present disclosure;
Figure 3 schematically represents a surveillance system according to an example of the present disclosure; and
Figure 4 schematically represents a block diagram of a surveillance method for an offshore infrastructure according to an example of the present disclosure.

### DETAILED DESCRIPTION OF EXAMPLES

In these figures the same reference signs have been used to designate matching elements.

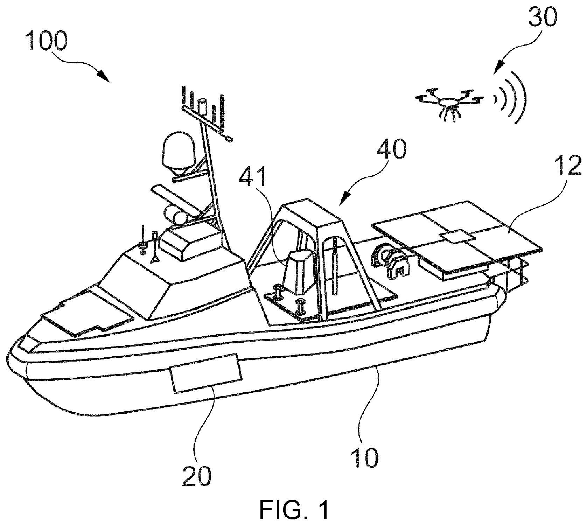

Figure 1 schematically represents a surveillance system 100 according to an example of the present disclosure. The surveillance system 100 of this figure comprises an unmanned surface vessel 10 having an environmental sensor system 40 and a carrying area 12 to carry an unmanned vehicle 30.

The unmanned vehicle 30 of this figure is an unmanned aerial vehicle. In other examples, the unmanned vehicle is an unmanned underwater vehicle. In further examples, the surveillance system comprises at least one unmanned aerial vehicle and at least one unmanned underwater vehicle. The carrying area 12 of this example is a landing platform. The carrying area may comprise a charging unit to charge the unmanned vehicle(s). In this example, the landing platform comprises a charging unit to electrically charge the unmanned aerial vehicle. In this figure, the unmanned aerial vehicle is flying, however, the carrying area 12 is able to support the unmanned aerial vehicle when the unmanned surface vessel 10 is operating, e.g. navigating. The landing platform may comprise elements, e.g. guiding marks or signals, to ease the landing or taking off of the unmanned aerial vehicle.

In other examples, for example for carrying an unmanned underwater vehicle, the carrying area may be an area arranged within the hull. A gate may be arranged at the hull to allow the unmanned underwater vehicle to leave the unmanned surface vessel.

The unmanned vehicle 30 comprises one or more sensors to inspect the offshore infrastructure. The unmanned aerial vehicle of this figure comprises a camera to obtain videos and/or photographs of the offshore infrastructure, e.g. a leading edge of a wind turbine blade of an offshore wind turbine. Alternatively, or in addition, the unmanned vehicle may comprise an ultrasonic sensor, an infrared sensor and/or a sonar.

The environmental sensor system 40 of this example comprises a lidar 41. The lidar 41 of this figure is a vertical lidar capable to obtain wind characteristics at different heights. The lidar 41 may measure wind speeds, wind turbulences and wind direction. In some examples, the lidar also measures air density. In further examples, air density may be obtained from an air density sensor, e.g. barometer. In some examples, the environmental sensor system comprises an ocean sensor, a camera, a sonar, a temperature sensor and an infrared sensor. The environmental sensor system may comprise a plurality of sensors to measure different environmental parameters.

For example, the environmental sensor system of a surveillance system for an offshore wind turbine may comprise at least a lidar, an ocean sensor, an air density sensor and a camera. This environmental sensor system may thus obtain wind speed, wind turbulence, wind direction, air density, visibility, sea current direction, wave height, wave direction and wavelength. These environmental parameters or some of these environmental parameters may be used to determine to inspect the offshore wind turbine.

The surveillance system 100 of figure 1 comprises a controller 20 arranged at the unmanned surface vessel. Communications between the environmental sensor system 40 and the controller 20 may thus be easily established. For example, the environmental sensor system may be wiredly connected to the controller. Communications between the controller and the unmanned vehicle may also be improved since the action radius of the unmanned vehicle is around the unmanned surface vessel.

The unmanned surface vessel may also comprise a stabilization system. The stabilization system stabilizes the unmanned surface vessel to counteract the effect of the waves. The stabilization system may maintain the unmanned surface vessel substantially horizontal. Lidar measurements may thus be more precisely obtained. In addition, landing and taking off operations of the unmanned aerial vehicle from the landing platform may be improved.

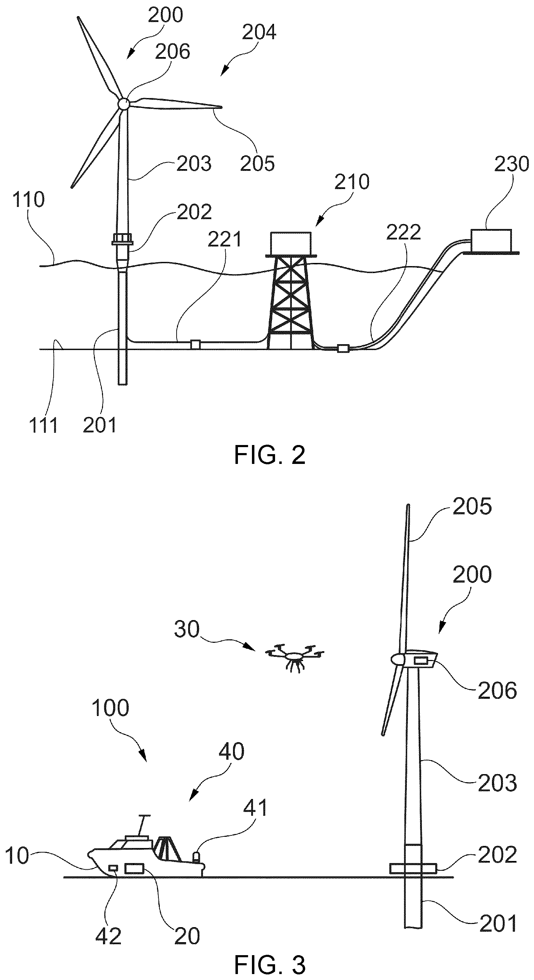

Figure 2 schematically represents a plurality of offshore infrastructures suitable to be monitored by the surveillance system according to any of the examples herein disclosed. Figure 2 shows an offshore wind turbine 200 that generates electricity from the wind. Electricity generated by the offshore wind turbine 200 is conducted by a first underwater power cable 221 to an offshore electrical substation 210. Voltage received at the offshore electrical substation 210 is stepped up to a higher voltage. A second underwater power cable 222 connects the offshore electrical substation 210 to an onshore electrical substation 230 which is connected to the electrical grid. Several offshore wind turbines may be connected to a single offshore electrical substation through underwater power cables. The underwater offshore cables substantially lay on the seabed 111. In other examples, the offshore electrical substation may be connected to another type of generation source, e.g. a tidal generator. In other examples, the offshore infrastructure may comprise an offshore oil and gas equipment, e.g. an offshore oil and gas platform.

The offshore wind turbine 200 comprises a rotor 204 rotatably coupled to a nacelle. The rotor 204 comprises a plurality of blades 205, three blades in this example, outwardly extending from a hub 206. Wind exercises a pressure against the blades 205, which generates the rotation of the rotor 204. This rotation is converted into electrical energy through an electrical generator, which is generally arranged at the nacelle. The nacelle is supported by a tower 203. The nacelle may rotate about the tower 203 through a yaw system to align the rotor with respect to the wind direction. The tower 203 is connected to a transition piece 202 arranged above the sea level 110 which is supported by a foundation 201. The foundation 201 anchors the offshore wind turbine 200 to the seabed 111.

In the example of figure 2, the foundation 201 is a monopile. A monopile or a single pile is a long cylindrical tube driven into the seabed 111. Other examples of fixed foundations may be jackets. Jackets are truss-like lattice structures of steel profiles. Instead of fixed foundations, floating foundations may be alternatively used. In floating foundations, a floating structure supporting the wind turbine tower is anchored to the seabed through a plurality of cables. Spar-buoy or tension leg platform foundations are examples of floating foundations.

Blades may rotate a pitch angle about its longitudinal axis to increase or reduce loads acting on the blade surface. Wind turbines generally operate following a predetermined power curve that relates wind speed to electrical power output. The power curve defines the pitch angle and the rotational speed of the generator for different wind speeds to generate a specific power output.

Power output at or above the nominal wind speed is maintained constant. At these wind speeds the blades are pitched, i.e. the pitch angle is increased, to reduce the energy captured from the wind and to maintain the rotational speed of the generator constant at the nominal rotational speed.

Power output at wind speeds lower than the nominal wind speed increases with the wind speed. The pitch angle is maintained constant to maximize the energy captured from the wind. This constant pitch angle may be called "below rated pitch position". The rotational speed of the generator may be varied until reaching its nominal rotational speed. At rotational speeds lower than the nominal rotational speed, the tip speed ratio λ (tangential velocity of the tip of the rotor blades divided by the prevailing wind speed) is kept constant so as to maximize the power coefficient Cp (ratio of actual power electric power produced by a wind turbine divided by the total wind power flowing into the wind turbine at specific wind turbine).

Accordingly, power output for a given wind speed may be predicted. However, yaw angle misalignments may adversely affect the output power. Furthermore, defects on the surface of the blade also affects the output power. In particular, degradation of the blade surface on the leading edge or on aerodynamic devices, e.g. vortex generators, reduce the output power. This reduction is generally more significant when the power coefficient Cp is maximum.

The offshore wind turbine 200 also comprises a wind turbine controller, e.g. SCADA, that controls the operation of the wind turbine. The wind turbine may obtain a wind speed and may control the operation of the wind turbine, e.g. pitch angle and/or rotational speed, aiming to follow a specific power curve. In some examples, the wind turbine operates following different power curves, each of them corresponding to a specific air density. The wind turbine controller may obtain the air density and may select a predetermined power curve corresponding to this specific air density. Sensors may be provided to measure the real power output. The real power output may be measured at a converter and/or a transformer arranged within the wind turbine. The wind turbine controller may also receive the real power output, e.g. from these sensors. Differences between the expected power output (according to the predetermined power curve) and the real power output may be indicative of a failure.

Figure 3 schematically represents a surveillance system according to an example of the present disclosure. The surveillance system of this figure may be according to any of the examples herein disclosed. The surveillance system 100 of figure 3 comprises an unmanned surface vessel 10 having an environmental sensor system 40 and a controller 20. The surveillance system 100 also comprises an unmanned vehicle 30 configured to inspect an offshore wind turbine 200. In this example, the unmanned vehicle 30 is an unmanned aerial vehicle.

In figure 3, the surveillance system 100 is used to monitor the operation of the offshore wind turbine 200. However, in other examples, the surveillance system of figure 3 may be employed to monitor other offshore infrastructures.

The environmental sensor system 40 of figure 3 comprises a lidar 41, an ocean sensor and a camera. These sensors may be used to measure environmental parameters. In this example, the lidar 41 is configured to at least measure wind speed. In some examples, the lidar is also configured to measure wind turbulence, wind direction and/or air density.

In this example, the controller 20 obtains the wind speed from the lidar 41. From this wind speed, the controller may determine the expected power output of the offshore wind turbine. The controller may determine the expected power output from a predetermined power curve of the offshore wind turbine. The expected value, in this example the expected power output, may be determined based on the one or more environmental parameters, e.g. wind speed. The predetermined power curve of the offshore wind turbine may be stored in a non-transitory machine-readable storage medium of the controller. The offshore wind turbine manufacturer may provide one or more power curves to be stored in the non-transitory machine-readable storage medium.

In some examples, the non-transitory machine-readable storage medium stores a plurality of predetermined power curves of the offshore wind turbines. Each of these predetermined power curves defines the relation of power output and wind speed at different wind turbulence levels and at different air density. Accordingly, for a given wind turbulence and air density, the offshore wind turbine is expected to operate according to a specific power curve.

In some examples, the controller is configured to also obtain the wind turbulence and the air density. Based on the wind turbulence and on the air density, the controller may select an expected power curve from a plurality of predetermined power curve to determine the expected power output. The expected power curve may be selected from the plurality of predetermined power curves stored in the storage medium. The controller may then calculate the expected power output from the selected expected power curve and the wind speed obtained from the environmental sensor.

The controller 20 of this figure is configured to receive one or more operational parameters of the offshore wind turbine from the wind turbine controller 206. The wind turbine controller 206 and the controller 20 are wirelessly coupled. The wind turbine controller 206 may send one or more operational parameters to the controller 20. For example, the wind turbine controller may send a pitch angle, a yaw angle and/or power output of the offshore wind turbine. The wind turbine controller may obtain these operational parameters according to any suitable method.

In this example, the controller 20 is configured to receive the power output of the wind turbine. Then, the controller may compare the power output, i.e. the real power output, to the expected power output calculated from the wind speed measured with the lidar. Differences between the expected power output and the real power output may be indicative of a failure. The controller may determine to perform an inspection if the difference between the expected power output power and the real power output is higher than a predetermined power output difference ratio. This indicates that a potential failure or malfunctioning of the offshore wind turbine may occur. In some examples, the predetermined power output difference ratio corresponds to the 10% of the expected power output. This is to say that an output power difference ratio higher than the 10% of the expected power output may indicate a potential failure or malfunction. In some examples, the power output difference ratio may be 5% of the expected power output, specifically 1%. The predetermined power output ratio may be adjusted for different wind speeds.

In some examples, the controller is configured to compare the expected power output and the real power output during a period of time. The environmental sensor system may measure environmental parameters during a period of time, e.g. between 1 - 8 hours. These environmental parameters, e.g. wind speed, may be used to estimate the expected power output. The power output of the offshore wind turbine during this period of time may be compared to the expected power output. This may reduce the uncertainty of the measures. The risk of deciding to inspect the offshore wind turbine when not strictly required is minimized. If the controller determines that a potential failure or malfunctioning may occur, an inspection of the offshore wind turbine with the unmanned aerial vehicle may be determined. Otherwise, the controller may determine not to inspect the offshore wind turbine. In some examples, if not inspecting the offshore wind turbine is determined, the controller may instruct the unmanned surface vessel to travel towards another location, e.g. towards an offshore infrastructure. In other examples, the controller is configured to continue monitoring the operation of the offshore wind turbine during a period of time. The controller may thus instruct the environmental sensor system to continue measuring the one or more environmental parameters. In this sense, accuracy of the decision may be increased.

In some examples, the controller may also take into account one or more environmental parameters to decide to perform the inspection. For example, if the environmental parameters are severe, the controller may determine not to inspect the offshore infrastructure to prevent damages on the unmanned vehicle. The controller may compare at least one of the one or more environmental parameters to a threshold. This comparison may also be taken into account for determining to inspect the offshore infrastructure. For example, the controller may compare the wind speed obtained from the lidar to a wind speed threshold. The wind speed threshold may be the maximum wind speed at which the unmanned aerial vehicle can fly. Additionally, or alternatively, the controller may compare the visibility to a visibility threshold to determine if the inspection is to be performed. If the visibility is lower than the visibility threshold, the unmanned aerial vehicle may not be able to obtain images or videos with a sufficient quality. The efficiency of the inspection may thus be increased if the visibility is taken into account.

In some examples, the unmanned aerial vehicle comprises a controller to determine a flight path towards the offshore wind turbine. In other examples, the flight path may be defined by the controller of the surveillance system. The unmanned aerial vehicle 30 of this figure comprises a camera to take pictures or videos of selected parts of the offshore wind turbines. For example, the unmanned aerial vehicle 30 may obtain images from the wind turbine blades 205, from the transition piece 202, from the tower 203 or from an above-water portion of the foundation 201. In other examples of offshore wind turbines, e.g. in floating offshore wind turbines, the unmanned aerial vehicle may also take pictures or videos from structural platforms (or parts of the structural platforms) arranged above the water.

In the example of this figure, the unmanned vehicle is an unmanned aerial vehicle. Alternatively, or additionally, the surveillance system may comprise an unmanned underwater vehicle. The unmanned underwater vehicle may perform inspections on the underwater portion of the foundation of the offshore wind turbine.

An unmanned underwater vehicle may be configured to obtain images from an underwater portion of the foundation of the offshore wind turbine. In these examples, the environmental sensor system comprises an ocean sensor to at least measure sea current speed and wherein the one or more environmental parameters comprises sea current speed and wherein the controller is further configured to compare the sea current speed to a sea current speed threshold. Determining to inspect the offshore wind turbine may also be based on the comparison of the sea current speed to the sea current speed threshold.

In some examples, the surveillance system comprises a plurality of unmanned vehicles, e.g. one or more unmanned aerial vehicles and one or more unmanned underwater vehicles.

The controller may be configured to receive, from the unmanned vehicle, data about the inspection of the offshore infrastructure. In this example, the controller 20 may receive one or more images from the unmanned aerial vehicle 30. These images may be images of the selected parts of the wind turbine 200, e.g. a leading edge of the wind turbine blades 205.

This data, e.g. images from the wind turbine, may be analyzed to determine the status of the offshore infrastructure, e.g. to determine the status of a part of the offshore wind turbine.

In this example, the controller 20 is configured to analyze data about the inspection of the offshore infrastructure, the offshore wind turbine 200 in this example. Analyze data about the inspection of the offshore infrastructure may comprise to compare this data to a predetermined pattern.

For example, the controller may be configured to compare images taken from the offshore wind turbine to a predetermined pattern. In some examples, images of the leading edge of the wind turbine blade are compared to predetermined images stored in a storage medium. In this example, the predetermined pattern is one or more predetermined images showing surface defects or the degradation of the leading edge of wind turbine blades. The controller may compare the images obtained from the wind turbine blades to the predetermined pattern to determine if the leading edge has been degraded or has failures. An image recognition software may be used to identify a potential failure or degradation. A processor of the controller may execute this image recognition software. Artificial intelligence may be used for accurately comparing the images of the offshore infrastructure to the predetermined pattern.

In some examples, the controller is configured to also receive images from other offshore infrastructures, e.g. from other offshore wind turbines. These images may be stored in a storage medium to increase the database of images showing failures or defects. These may increase the number of predetermined patterns to compare the images taken from the offshore infrastructure. Accordingly, a failure may be more accurately determined.

In some examples, to analyze data about the inspection of the offshore infrastructure comprises to determine the status of the offshore wind turbine. The status indicates if a maintenance operation is required or if no defects have been detected.

In some examples, to determine the status of the offshore infrastructure comprises to perform a diagnosis of a cause of a failure. For example, if the controller detects a microcrack on a blade surface, the controller may determine which is the cause of this microcrack. Artificial intelligence and machine learning may be used to relate a specific failure to a predetermined cause of this failure. Predetermined images from other offshore infrastructure may be used to determine the failure and a potential cause of this failure. A look-up table may be used to relate predetermined images showing a defect and potential causes of this defect.

In addition, the controller may be configured to determine the impact of the failure on the offshore infrastructure. For example, the controller may determine the impact on the power production and/or on the safety of the offshore wind turbine of the failure or defect. Depending on the impact of the failure, the controller may generate a maintenance plan and schedule maintenance tasks when required. For example, failures involving a relatively low impact on the offshore infrastructure, e.g. offshore wind turbine, may be corrected when other maintenance operations are to be performed. In this way, efficiency of the maintenance plan may be improved. Annual energy production may also be improved since corrective maintenance tasks may be scheduled together with other maintenance operations or when the offshore wind turbine is not operating.

Analyzing data about the inspection of the offshore infrastructure may comprise sending an alarm to an onshore controller. The onshore controller or a maintenance operator may determine a maintenance plan to fix the detected failure or defect. Alternatively, or additionally, the controller may generate a maintenance plan. The maintenance plan may include corrective maintenance tasks and/or preventive maintenance tasks. Corrective maintenance tasks may be performed to directly fix the failure or defect detected. Preventive maintenance task may be performed to maintain failures or defects under certain limits or to prevent that these failures could occur in other parts of the offshore infrastructure.

In these examples, the controller of the surveillance system arranged at the unmanned surface vessel is configured to analyze data about the inspection of the offshore infrastructure received from the unmanned vehicle. However, in some examples, the controller may be configured to send data about the inspection of the offshore infrastructure to an onshore controller. This onshore controller may analyze this data to determine the status of the offshore infrastructure and to schedule a maintenance operation if required. In some of these examples, the surveillance system also comprises the onshore controller. The controller and the onshore controller may be connected through a wireless connection, e.g. through a satellite connection. The onshore controller may analyze data about the inspection according to any of the examples herein disclosed.

In the example of figure 3, the offshore infrastructure is an offshore wind turbine 200. The surveillance system 100 of figure 3 is thus configured to monitor the operation of the offshore wind turbine 200. The surveillance system may also be configured to monitor other types of offshore infrastructures, e.g. an electrical substation and/or an underwater power cable.

A surveillance system with an environmental sensor system comprising an infrared sensor may be used for measuring the temperature of an electrical substation and/or an underwater power cable. In these examples, the one or more operational parameters are respectively the temperature of the electrical substation and the temperature of the underwater power cable. Sea salinity may also be measured in the surveillance of an underwater power cable, since changes in sea salinity may indicate a degradation of the isolation of the underwater power cable.

Water quality may also be measured, since the water quality may for example indicate leakage of an underwater element, e.g. an underwater conduction or a degradation of an element of the offshore infrastructure. In this example, the one or more environmental parameters comprises a water quality and the one of the operational parameters of the offshore infrastructure may correspond to a leakage level or to degradation level of a part of the offshore infrastructure.

An unmanned aerial vehicle may be used to inspect an electrical substation. The unmanned aerial vehicle may be equipped with a camera and/or an infrared sensor to for inspecting the temperature of the electrical substation. The environmental sensor system of the unmanned surface vessel may comprise a lidar to at least measure wind speed. The controller of the unmanned surface vessel may also be configured to compare the wind speed to a wind speed threshold according to any of the examples herein disclosed. In this example, determining to inspect the electrical substation is also based on the comparison of the wind speed to the wind speed threshold.

An unmanned underwater vehicle may be used to inspect an underwater power cable. The unmanned underwater vehicle may comprise camera and/or an infrared sensor for inspecting the underwater power cable. Current speed may be compared to a current speed threshold and this comparison may also be taken into account for determining to inspect the underwater power cable.

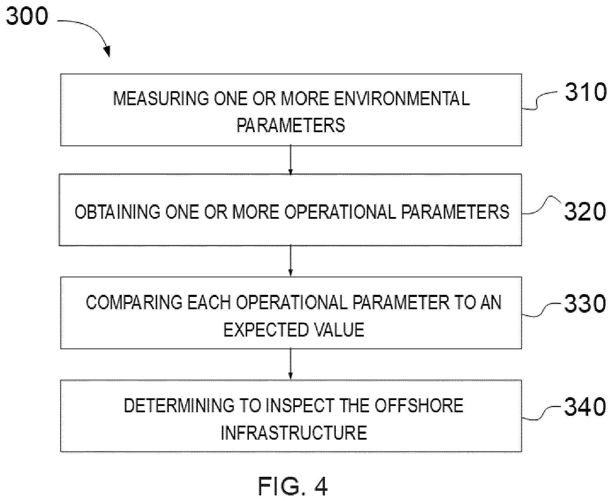

Figure 4 is a block diagram of a surveillance method 300 for an offshore infrastructure. The offshore infrastructure or the offshore infrastructures may be according to any of the examples herein disclosed. The method may be performed by a surveillance system according to any of the examples herein disclosed.

At block 310, measuring, with an environmental sensor system of an unmanned surface vessel, one or more environmental parameters is represented. The one or more environmental parameters may be according to any of the examples herein described, e.g. wind speed. The environmental sensor system of the unmanned surface vessel may be suitable to measure the one or more environmental parameters.

Obtaining one or more operational parameters of the offshore infrastructure is represented at block 320. In some examples, a controller of the surveillance system may determine the one or more operational parameters from the one or more environmental parameters. In some examples, the environmental sensor system may measure the temperature of the offshore infrastructure and the operational parameter may be this temperature. In some examples, operational parameters of an offshore wind turbine may be obtained from the offshore wind turbine. A controller of the offshore wind turbine may send operational parameters to the controller of the surveillance system.

At block 330, comparing each of the operational parameter to an expected value is represented. This comparison may be according to any of the examples herein disclosed. A controller of the surveillance system may carry out this comparison. In some examples, comparing each of the operational parameter to an expected value comprises comparing a temperature of the offshore infrastructure to a maximum temperature limit. In some examples, this comparison comprises calculating the expected power output from the one or more environmental parameters and compared the power output of the offshore wind turbine to this calculated expected power output.

Determining, based on the comparison, to inspect the offshore infrastructure with an unmanned vehicle is represented at block 340. A controller of the surveillance system may determine to inspect the offshore infrastructure. The decision to inspect offshore infrastructure may be according to any of the examples herein disclosed.

In some examples, the method comprises positioning the unmanned surface vessel at a predetermined position. The unmanned surface vessel may be positioned at a distance of the offshore infrastructure. Distance of the unmanned vehicle for inspecting the offshore infrastructure may thus be reduced. Furthermore, communications between the offshore infrastructure and the controller of the surveillance system may thus be improved. In addition, in case of offshore wind turbines, wind speed measure for the environmental sensor system substantially correspond to the wind speed of the wind acting on the offshore wind turbine.

In some examples, the method comprises stabilizing the unmanned surface vessel. Mechanical stabilizers may be used to compensate the action of the waves. Measurements made by the environmental sensor system may precisely measure environmental parameters despite the action of the waves.

In some examples, the method further comprises comparing at least one of the one or more environmental parameter to a threshold. In these examples, determining to inspect the offshore infrastructure is further based on the comparison of the at least one of the one or more environmental parameters to the threshold. In this way, determining to inspect the offshore infrastructure at high wind speeds or at high sea currents may be prevented. Safety of the surveillance method may thus be improved.

In some examples, the method further comprises continuing measuring the one or more environmental parameters when not inspecting the offshore infrastructure is determined. The method may include measuring the one or more environmental parameters during a period of time. In some of these examples, the method also includes obtaining the one or more operational parameters of the offshore infrastructure during this period of time. In these examples, more data may be taken into account to decide on performing the inspection with the unmanned vehicle.

In some examples, when not inspecting the offshore infrastructure is determined, the method comprises moving the unmanned surface vessel towards another location. The surveillance system may then be used to determine if an inspection is to be performed to another offshore infrastructure. For example, the unmanned surface vessel may be moved near to another offshore infrastructure.

In some examples, the method comprises moving the unmanned vehicle towards the offshore infrastructure when inspecting the offshore infrastructure is determined. For example, an unmanned aerial vehicle may fly to an offshore wind turbine, e.g. to a leading edge of a wind turbine blade of the offshore wind turbine.

In some examples, the method comprises inspecting and acquiring, with the unmanned vehicle, data about the inspection of the offshore infrastructure. Acquiring data may comprises obtaining one or more images of the offshore infrastructure. For example, the unmanned vehicle may be an unmanned aerial vehicle that may obtain one or more images of an offshore wind turbine, e.g. of wind turbine blades and/or of the transition piece.

In some examples, the data about the inspection of the offshore infrastructure, e.g. images, is sent to a controller. In some examples, this controller may be the controller of the surveillance system, e.g. arranged at the unmanned vessel surface or at an onshore location. In other examples, the controller may be an external onshore controller, i.e. an onshore controller not forming part of the surveillance system.

In some examples, the method comprises analyzing the data about inspection of the offshore controller. This analysis may be carried out by the controller of the surveillance system and/or by an onshore controller not forming part of the surveillance system. Data may be analyzed according to any of the examples herein disclosed.

In some examples, analyzing data comprises comparing data about the inspection to a predetermined pattern. As explained regarding other aspects of the present disclosure, the result of this comparison may determine if a failure or a defect occurs, and if so, which is the type of failure or defect. The predetermined pattern may be according to any of the examples herein disclosed. For example, images of the leading edge of a wind turbine blade may be compared to images contained in a database to determine if a defect occurs.

In some examples, analyzing data about the inspection comprises determining the status of the offshore infrastructure so as to determine if a maintenance operation is required. The status may be determined according to any of the examples herein disclosed. In some examples, determining the status comprises performing a diagnosis of a cause of the failure. In some of these examples, performing the diagnosis of the cause of the failure comprises determining the impact of the failure on the offshore infrastructure. Accordingly, a maintenance plan may be precisely and efficiently scheduled.

In some examples, the method further comprises sending an alarm to an onshore controller, e.g. an onshore controller not forming part of the surveillance system. Additionally, or alternatively, the method may comprise generating a maintenance plan. This maintenance plan may be generated by the controller of the surveillance system, e.g. arranged at the unmanned surface vessel, or by an onshore controller of an onshore control center. The maintenance plan may contain a corrective and/or a preventive maintenance task.

Although only a number of examples have been disclosed herein, other alternatives, modifications and/or uses thereof are possible. Thus, the scope of the present disclosure should not be limited by particular examples, but should be determined only by the claims that follow.

## Claims

1. A surveillance system (100) for an offshore infrastructure comprising:
an unmanned vehicle (30) for inspecting the offshore infrastructure;
an unmanned surface vessel (USV) (10) comprising:
- an environmental sensor system (40) to measure one or more environmental parameters;
- a carrying area (12) to carry the unmanned vehicle (30); and
a controller (20) configured to:
- obtain the one or more environmental parameters from the environmental sensor system (40);
**characterized in that** the controller is further configured to:
- obtain one or more operational parameters of the offshore infrastructure;
- compare each of the operational parameters to an expected value; and
- determine, based on the comparison, to inspect the offshore infrastructure with the unmanned vehicle (30).

2. A surveillance system (100) according to any of claim 1, wherein the controller (20) is arranged at the unmanned surface vessel (10).

3. A surveillance system (100) according to any of claims 1 - 2, wherein the environmental sensor system (40) comprises a lidar (41), an ocean sensor, a sonar, a temperature sensor, an air density sensor, an infrared sensor and/or camera.

4. A surveillance system (100) according to any of claims 1 - 3, wherein the one or more environmental parameters comprises at least one of: wind speed, wind direction, wind turbulence, air density, visibility, temperature, sea current speed, sea current direction, wave height, wave direction, wavelength, sea salinity, water quality and sea level.

5. A surveillance system (100) according to any of claims 1 - 4, wherein the one or more operational parameters of the offshore infrastructure comprises:
leakage level of the offshore infrastructure; and/or
degradation level of the offshore infrastructure; and/or
a pitch angle of an offshore wind turbine (200), when the offshore infrastructure comprises the offshore wind turbine (200); and/or yaw angle of an offshore wind turbine (200), when the offshore infrastructure comprises the offshore wind turbine (200);
a power output of an offshore wind turbine, when the offshore infrastructure comprises the offshore wind turbine (200); and/or
a temperature of an offshore electrical substation, when the offshore infrastructure comprises the offshore electrical substation (210); , and/or
a temperature of a submarine power cable, when the offshore infrastructure comprises the submarine power cable (221, 222).

6. A surveillance system (100) according to any of claims 1 - 5, wherein the controller (20) is further configured to compare at least one of the one or more environmental parameters to a threshold; and wherein to determine to inspect the offshore infrastructure is further based on the comparison of the at least one of the one or more environmental parameters to the threshold.

7. A surveillance system (100) according to any of claims 1 - 6, wherein the controller (20) is further configured to instruct the environmental sensor system (40) to continue measuring the one or more environmental parameters and/or to travel towards another location when not to inspect the offshore infrastructure is determined.

8. A surveillance system (100) according to any of claims 1 - 7, wherein the controller (20) is further configured to instruct the unmanned vehicle (30) to inspect the offshore infrastructure when to inspect the offshore infrastructure is determined.

9. A surveillance system (100) according to claim 8, wherein the controller (20) is further configured to receive, from the unmanned vehicle (30), data about the inspection of the offshore infrastructure.

10. A surveillance system (100) according to claim 9, wherein the controller (20) is further configured to send the data about the inspection of the offshore infrastructure to an onshore controller.

11. A surveillance system (100) according to any of claims 1 - 10, wherein the offshore infrastructure comprises an offshore wind turbine (200), an oil and gas equipment, an offshore electrical substation (210) and/or a submarine power cable (221, 222).

12. A surveillance method (300) for an offshore infrastructure comprising:
measuring (310), with an environmental sensor system (40) of an unmanned surface vessel (USV) (10), one or more environmental parameters;
**characterized in that** the method (300) further comprises:
obtaining (320) one or more operational parameters of the offshore infrastructure;
comparing (330) each of the operational parameters to an expected value; and
determining (340), based on the comparison, to inspect the offshore infrastructure with an unmanned vehicle (30).

13. A surveillance method (300) according to claim 12, further comprising comparing at least one of the one or more environmental parameter to a threshold and wherein determining to inspect the offshore infrastructure is further based on the comparison of the at least one of the one or more environmental parameters to the threshold.

14. A surveillance method (300) according to any of claims 12 - 13, further comprising moving the unmanned vehicle (30) towards the offshore infrastructure when inspecting the offshore infrastructure is determined.

15. A surveillance method (300) according to claim 14, further comprising inspecting and acquiring, with the unmanned vehicle (30), data about the inspection of the offshore infrastructure.

## Patentansprüche

1. Ein Überwachungssystem (100) für eine Offshore-Infrastruktur, umfassend:
ein unbemanntes Fahrzeug (30) zum Prüfen der Offshore-Infrastruktur;
ein unbemanntes Oberflächenschiff (USV, *unmanned surface vessel*) (10), umfassend:
- ein Umweltsensorsystem (40), um einen oder mehrere Umweltparameter zu messen;
- einen Tragebereich (12) zum Tragen des unbemannten Fahrzeugs (30); und
eine Steuerung (20), die dazu konfiguriert ist:
- den einen oder die mehreren Umweltparameter von dem Umweltsensorsystem (40) zu erhalten;
**dadurch gekennzeichnet, dass** die Steuerung weiterhin dazu konfiguriert ist:
- einen oder mehrere Betriebsparameter der Offshore-Infrastruktur zu erhalten;
- jedes der Betriebsparameter mit einem erwarteten Wert zu vergleichen; und
- auf Grundlage des Vergleichs zu bestimmen, die Offshore-Infrastruktur mit dem unbemannten Fahrzeug (30) zu prüfen.

2. Ein Überwachungssystem (100) nach einem des Anspruchs 1, wobei die Steuerung (20) an dem unbemannten Oberflächenschiff (10) angeordnet ist.

3. Ein Überwachungssystem (100) nach einem der Ansprüche 1 bis 2, wobei das Umgebungssensorsystem (40) ein Lidar (41), einen Ozeansensor, ein Sonar, einen Temperatursensor, einen Luftdichtesensor, einen Infrarotsensor und/oder eine Kamera umfasst.

4. Ein Überwachungssystem (100) nach einem der Ansprüche 1 bis 3, wobei der eine oder die mehreren Umgebungsparameter mindestens eines von den Folgenden umfassen: Windgeschwindigkeit, Windrichtung, Windturbulenz, Luftdichte, Sichtbarkeit, Temperatur, Meeresströmungsgeschwindigkeit, Meeresströmungsrichtung, Wellenhöhe, Wellenrichtung, Wellenlänge, Meeressalzgehalt, Wasserqualität und Meeresspiegel.

5. Ein Überwachungssystem (100) nach einem der Ansprüche 1 bis 4, wobei der eine oder die mehreren Betriebsparameter der Offshore-Infrastruktur Folgendes umfassen:
den Leckagegrad der Offshore-Infrastruktur; und/oder
den Degradationsgrad der Offshore-Infrastruktur; und/oder
einen Nickwinkel einer Offshore-Windturbine (200), wenn die Offshore-Infrastruktur die Offshore-Windturbine (200) umfasst; und/oder
den Gierwinkel einer Offshore-Windturbine (200), wenn die Offshore-Infrastruktur die Offshore-Windturbine (200) umfasst;
eine Leistungsabgabe einer Offshore-Windturbine, wenn die Offshore-Infrastruktur die Offshore-Windturbine (200) umfasst; und/oder
eine Temperatur einer Offshore-Umspannstation, wenn die Offshore-Infrastruktur die Offshore-Umspannstation (210) umfasst; und/oder
eine Temperatur eines Seestromkabels, wenn die Offshore-Infrastruktur das Seestromkabel (221, 222) umfasst.

6. Ein Überwachungssystem (100) nach einem der Ansprüche 1 bis 5, wobei die Steuerung (20) weiterhin dazu konfiguriert ist, mindestens einen des einen oder der mehreren Umgebungsparameter mit einem Schwellenwert zu vergleichen; und wobei das Bestimmen, die Offshore-Infrastruktur zu prüfen, weiterhin auf dem Vergleich des mindestens einen des einen oder der mehreren Umgebungsparameter mit dem Schwellenwert basiert.

7. Ein Überwachungssystem (100) nach einem der Ansprüche 1 bis 6, wobei die Steuerung (20) weiterhin dazu konfiguriert ist, das Umgebungssensorsystem (40) anzuweisen, das Messen des einen oder der mehreren Umgebungsparameter fortzusetzen und/oder sich zu einem anderen Ort zu bewegen, wenn bestimmt wird, dass die Offshore-Infrastruktur nicht zu prüfen ist.

8. Ein Überwachungssystem (100) nach einem der Ansprüche 1 bis 7, wobei die Steuerung (20) weiterhin dazu konfiguriert ist, das unbemannte Fahrzeug (30) anzuweisen, die Offshore-Infrastruktur zu prüfen, wenn bestimmt wird, dass die Offshore-Infrastruktur zu prüfen ist.

9. Ein Überwachungssystem (100) nach Anspruch 8, wobei die Steuerung (20) weiterhin dazu konfiguriert ist, von dem unbemannten Fahrzeug (30) Daten über die Prüfung der Offshore-Infrastruktur zu empfangen.

10. Ein Überwachungssystem (100) nach Anspruch 9, wobei die Steuerung (20) weiterhin dazu konfiguriert ist, die Daten über die Prüfung der Offshore-Infrastruktur an eine Onshore-Steuerung zu senden.

11. Ein Überwachungssystem (100) nach einem der Ansprüche 1 bis 10, wobei die Offshore-Infrastruktur eine Offshore-Windturbine (200), eine Öl- und Gasausrüstung, eine elektrische Offshore-Umspannstation (210) und/oder ein Seestromkabel (221, 222) umfasst.

12. Ein Überwachungsverfahren (300) für eine Offshore-Infrastruktur, umfassend:
messen (310) eines oder mehrerer Umweltparameter mit einem Umweltsensorsystem (40) eines unbemannten Oberflächenschiffs (USV) (10);
**dadurch gekennzeichnet, dass** das Verfahren (300) weiterhin Folgendes umfasst:
erhalten (320) eines oder mehrerer Betriebsparameter der Offshore-Infrastruktur;
vergleichen (330) jedes der Betriebsparameter mit einem erwarteten Wert; und
bestimmen (340), auf Grundlage des Vergleichs, die Offshore-Infrastruktur mit einem unbemannten Fahrzeug (30) zu prüfen.

13. Ein Überwachungsverfahren (300) nach Anspruch 12, weiterhin umfassend das Vergleichen von mindestens einem von dem einen oder den mehreren Umgebungsparametern mit einem Schwellenwert und wobei das Bestimmen, die Offshore-Infrastruktur zu prüfen, weiterhin auf dem Vergleich des mindestens einen von dem einen oder den mehreren Umgebungsparametern mit dem Schwellenwert basiert.

14. Ein Überwachungsverfahren (300) nach einem der Ansprüche 12 bis 13, weiterhin umfassend das Bewegen des unbemannten Fahrzeugs (30) in Richtung zur Offshore-Infrastruktur, wenn bestimmt wird, die Offshore-Infrastruktur zu prüfen.

15. Ein Überwachungsverfahren (300) nach Anspruch 14, weiterhin umfassend das Prüfen und das Erfassen von Daten über die Prüfung der Offshore-Infrastruktur mit dem unbemannten Fahrzeug (30).

## Revendications

1. Un système de surveillance (100) pour une infrastructure offshore comprenant :
un véhicule sans pilote (30) pour inspecter l'infrastructure offshore ;
un navire de surface sans pilote (USV, *unmanned surface vessel*) (10) comprenant :
- un système de capteur environnemental (40) pour mesurer un ou plusieurs paramètres environnementaux ;
- une zone de transport (12) pour transporter le véhicule sans pilote (30) ; et
un contrôleur (20) configuré pour :
- obtenir le un ou les plusieurs paramètres environnementaux à partir du système de capteur environnemental (40) ;
**caractérisé en ce que** le contrôleur est en outre configuré pour :
- obtenir un ou plusieurs paramètres opérationnels de l'infrastructure offshore ;
- comparer chacun des paramètres opérationnels à une valeur attendue ; et
- déterminer, sur la base de la comparaison, d'inspecter l'infrastructure offshore avec le véhicule sans pilote (30).

2. Un système de surveillance (100) selon l'une quelconque de la revendication 1, dans lequel le contrôleur (20) est agencé au niveau du navire de surface sans pilote (10).

3. Un système de surveillance (100) selon l'une quelconque des revendications 1 à 2, dans lequel le système de capteur environnemental (40) comprend un lidar (41), un capteur océanique, un sonar, un capteur de température, un capteur de densité d'air, un capteur infrarouge et/ou une caméra.

4. Un système de surveillance (100) selon l'une quelconque des revendications 1 à 3, dans lequel le un ou les plusieurs paramètres environnementaux comprennent au moins un paramètre parmi : la vitesse du vent, la direction du vent, la turbulence du vent, la densité de l'air, la visibilité, la température, la vitesse des courants marins, la direction des courants marins, la hauteur des vagues, la direction des vagues, la longueur d'onde, la salinité de la mer, la qualité de l'eau et le niveau de la mer.

5. Un système de surveillance (100) selon l'une quelconque des revendications 1 à 4, dans lequel le un ou les plusieurs paramètres opérationnels de l'infrastructure offshore comprennent :
le niveau de fuite de l'infrastructure offshore ; et/ou
le niveau de dégradation de l'infrastructure offshore ; et/ou
un angle de tangage d'une éolienne offshore (200), lorsque l'infrastructure offshore comprend l'éolienne offshore (200) ; et/ou
l'angle de lacet d'une éolienne offshore (200), lorsque l'infrastructure offshore comprend l'éolienne offshore (200) ;
une puissance de sortie d'une éolienne offshore, lorsque l'infrastructure offshore comprend l'éolienne offshore (200) ; et/ou
une température d'une sous-station électrique offshore, lorsque l'infrastructure offshore comprend la sous-station électrique offshore (210) ; et/ou
une température d'un câble d'alimentation sous-marin, lorsque l'infrastructure offshore comprend le câble d'alimentation sous-marin (221, 222).

6. Un système de surveillance (100) selon l'une quelconque des revendications 1 à 5, dans lequel le contrôleur (20) est en outre configuré pour comparer au moins l'un de l'un ou des plusieurs paramètres environnementaux à un seuil ; et dans lequel la détermination d'inspecter l'infrastructure offshore est en outre basée sur la comparaison de l'au moins un de l'un ou des plusieurs paramètres environnementaux au seuil.

7. Un système de surveillance (100) selon l'une quelconque des revendications 1 à 6, dans lequel le contrôleur (20) est en outre configuré pour ordonner au système de capteur environnemental (40) de continuer à mesurer le un ou les plusieurs paramètres environnementaux et/ou de se déplacer vers un autre emplacement lorsqu'il est déterminé de ne pas inspecter l'infrastructure offshore.

8. Un système de surveillance (100) selon l'une quelconque des revendications 1 à 7, dans lequel le contrôleur (20) est en outre configuré pour ordonner au véhicule sans pilote (30) d'inspecter l'infrastructure offshore lorsqu'il est déterminé d'inspecter l'infrastructure offshore.

9. Un système de surveillance (100) selon la revendication 8, dans lequel le contrôleur (20) est en outre configuré pour recevoir, à partir du véhicule sans pilote (30), des données concernant l'inspection de l'infrastructure offshore.

10. Un système de surveillance (100) selon la revendication 9, dans lequel le contrôleur (20) est en outre configuré pour envoyer les données concernant l'inspection de l'infrastructure offshore à un contrôleur onshore.

11. Un système de surveillance (100) selon l'une quelconque des revendications 1 à 10, dans lequel l'infrastructure offshore comprend une éolienne offshore (200), un équipement pétrolier et gazier, une sous-station électrique offshore (210) et/ou un câble d'alimentation sous-marin (221, 222).

12. Un procédé de surveillance (300) pour une infrastructure offshore comprenant:
mesurer (310), avec un système de capteur environnemental (40) d'un navire de surface sans pilote (USV) (10), un ou plusieurs paramètres environnementaux ;
**caractérisé en ce que** le procédé (300) comprend en outre:
obtenir (320) un ou plusieurs paramètres opérationnels de l'infrastructure offshore ;
comparer (330) chacun des paramètres opérationnels à une valeur attendue ; et
déterminer (340), sur la base de la comparaison, d'inspecter l'infrastructure offshore avec un véhicule sans pilote (30).

13. Un procédé de surveillance (300) selon la revendication 12, comprenant en outre la comparaison d'au moins un de l'un ou des plusieurs paramètres environnementaux à un seuil et dans lequel la détermination d'inspecter l'infrastructure offshore est en outre basée sur la comparaison de l'au moins un de l'un ou des plusieurs paramètres environnementaux au seuil.

14. Un procédé de surveillance (300) selon l'une quelconque des revendications 12 à 13, comprenant en outre le déplacement du véhicule sans pilote (30) vers l'infrastructure offshore lorsqu'on détermine d'inspecter l'infrastructure offshore.

15. Un procédé de surveillance (300) selon la revendication 14, comprenant en outre l'inspection et l'acquisition, avec le véhicule sans pilote (30), de données concernant l'inspection de l'infrastructure offshore.
